# FASCICULE DE BREVET EUROPEEN

(11) **EP 2 321 170 B1**
(45) Date de publication et mention de la délivrance du brevet: **01.08.2012**
(21) Numéro de dépôt: 09757624.3
(22) Date de dépôt: 05.06.2009
(51) Int. Cl.: B62D 57/032, B25J 19/00

(54) **PIED POUR ROBOT HUMANOÏDE**
FUSS FÜR EINEN HUMANOIDROBOTER
FOOT FOR HUMANOID ROBOT

(30) Priorité: 05.06.2008 FR 0853713
(43) Date de publication de la demande: 18.05.2011
(73) Titulaire: Bia, 78700 Conflans Ste Honorine (FR)
(72) Inventeur: ALFAYAD, Samer, F-92340 Bourg La Reine (FR); BEN OUEZDOU, Fathi, F-92340 Bourg La Reine (FR); NAMOUN, Fayçal, F-92400 Courbevoie (FR)
(74) Mandataire: Collet, Alain
(86) Numéro de dépôt international: PCT/EP2009/056965
(87) Numéro de publication internationale: WO 2009/147243

(56) Documents cités:
- EP-A- 1 736 285
- JP-A- 2006 051 585
- US-A- 5 455 497
- NISHIWAKI K ET AL: "Toe joints that enhance bipedal and fullbody motion of humanoid robots" PROCEEDINGS 2002 IEEE INTERNATIONAL CONFERENCE ON ROBOTICS AND AUTOMATION (CAT. NO.02CH37292) IEEE PISCATAWAY, NJ, USA, vol. 3, mai 2002 (2002-05), pages 3105-3110 VOL., XP002537738 DOI: 10.1524/itit.2007.49.4.218 ISBN: 0-7803-7272-7
- SVEN BEHNKE: "Human-Like Walking using Toes Joint and Straight Stance Leg" PROCEEDINGS OF THE 3RD INTERNATIONAL SYMPOSIUM ON ADAPTIVE MOTION IN ANIMALS AND MACHINES (AMAM2005), ILMENAU, GERMANY, [Online] 25 septembre 2005 (2005-09-25), - 30 septembre 2005 (2005-09-30) XP002537739 Extrait de l'Internet: URL:http://www.ais.uni-bonn.de/nimbro/pape rs/AMAM05_Behnke.pdf> [extrait le 2009-07-17]
- HEINZ ULBRICH - INSTITUT DE MECANIQUE APPLIQUEE - UNIVERSITE TECHNIQUE DE MUNICH: "LOLA - Entwicklung und Realisierung zweibeiniger Roboter inspiriert nach dem menschlichen Vorbild" SCRIPT DE L'EXPOSÉ DU PROFESSEUR H. ULBRICH LORS DU 3EME FORUM POUR LA MOBILITÉ, SEEFELD, ALLEMAGNE, [Online] 24 septembre 2008 (2008-09-24), XP002537740 Extrait de l'Internet: URL:http://www.munichnetwork.com/fileadmin /user_upload/konferenzen/mobilitaetsforum- 3/080924UlbrichProfDrHeinz_LOLA.pdf> [extrait le 2009-07-17]
- JUNGWON YOON ET AL: "A Novel 4-DOF Robotic Foot Mechanism with Multi-platforms for Humanoid Robot (SICE-ICCAS 2006)" SICE-ICCAS 2006 INTERNATIONAL JOINT CONFERENCE,, 1 octobre 2006 (2006-10-01), pages 3500-3504, XP031050125 ISBN: 978-89-950038-4-8
- LIQUAN WANG ET AL: "Research on Biped Robot Gait in Double-support Phase" MECHATRONICS AND AUTOMATION, 2007. ICMA 2007. INTERNATIONAL CONFERENCE ON, IEEE, PI, 1 août 2007 (2007-08-01), pages 1553-1558, XP031134976 ISBN: 978-1-4244-0827-6

## Description

L'invention concerne un pied et un robot humanoïde mettant en oeuvre le pied. L'invention trouve une utilité particulière dans la réalisation de robots humanoïdes se rapprochant au mieux de la morphologie humaine.

Un modèle mathématique modélisant cette morphologie a été développé dans les années 1960 aux Etats-Unis par Aerospace Medical Research Laboratories situé à Dayton, Ohio. Ce modèle, bien connu sous le nom de modèle de Hanavan, décrit de façon paramétrique, en rapport à une taille et masse humaines données, les dimensions de toutes les parties du corps. Généralement, le pied est décrit comme comportant une semelle et des orteils liés entre eux au moyen d'une articulation à un degré de liberté en rotation dans un plan sagittal du pied.

Par exemple, pour un adolescent de 14 ans, de taille 1,6m et de masse 50kg, le pied est composé par un ensemble de parallélépipèdes rectangles. La longueur totale du pied est de 243 mm, la largeur est de 80 mm, la hauteur de talon est de 62 mm et la distance entre l'arrière de pied et la liaison des orteils est de 207mm.

A l'heure actuelle, de nombreux robots humanoïdes ont été développés, mais aucun ne respecte le modèle de Hanavan. De plus, les robots connus ont des pieds larges et massifs, soit sans aucune mobilité, ou bien avec une mobilité passive au niveau des orteils. De tels pieds dégradent la fluidité de la marche du robot et l'éloignent sensiblement de la façon de marcher de l'être humain.

Un calcul dynamique, montre que pour réaliser une marche à une vitesse de 1,2 m/s, et toujours pour un robot de 1,6 m et 50kg, la liaison du pied entre semelle et orteils nécessite un couple de l'ordre de 20 N.m, avec une puissance de 30 W, et un débattement articulaire de 0°à +60°.

L'invention vise à améliorer la concordance entre la réalisation d'un robot et l'anatomie humaine, par exemple modélisée dans le modèle de Hanavan. L'invention vise également à améliorer la fluidité des mouvements du robot lorsqu'il marche sans pour autant reproduire une modélisation complexe du pied humain.

Pour atteindre ces buts, l'invention propose de réaliser un pied dont les orteils sont mobiles par rapport à la semelle. Un tel pied pour robot humanoïde est divulgué dans l'article "Toe Joints that Enhance Bipedal and Fullbody Motion of Humanoid Robots" publié par l'IEEE. L'invention propose d'appliquer un couple à la liaison entre les orteils et la semelle, sans que ce couple soit forcément dépendant de la course angulaire des orteils dans leurs mouvements de rotation. En effet, le fait d'appliquer un tel couple à la liaison entre les orteils et la semelle permet d'améliorer la phase propulsive du pied du robot pour se rapprocher de celle que le pied humain assure, afin d'améliorer la fluidité de la marche du robot.

A cet effet, l'invention a pour objet un pied pour robot humanoïde, pouvant être relié à une jambe au moyen d'une cheville, caractérisé en ce qu'il comprend :
- une semelle (11),
- des orteils (12),
- une liaison (13) motorisée, indépendante de la cheville, en rotation entre la semelle (11) et les orteils (12), les orteils (12) pouvant se déplacer selon une course angulaire autour d'un axe (14) de la liaison (13),
- un actionneur (19) permettant à la motorisation de la liaison (13),
- et des moyens pour contrôler l'actionneur (19) de façon autonome, Ces moyens permettant de choisir un état parmi
   - une rigidité complète de la liaison
   - un couple de rappel Fonction de la course angulaire de la liaison
   - un amortissement de la rotation de la liaison
   - un apport énergétique lors de la rotation de la liaison

L'invention a également pour objet un robot humanoïde caractérisée en ce qu'il comprend au moins un pied selon l'invention.

On a tenté d'appliquer aux orteils un couple dépendant de leur course angulaire. Ce couple est appliqué au moyen d'un ressort comme par exemple un ressort de torsion placée dans la liaison entre orteils et semelle. On a constaté qu'un tel couple ne donnait pas de résultats significatifs quant à l'amélioration de la phase propulsive du pied.

L'invention sera mieux comprise et d'autres avantages apparaîtront à la lecture de la description détaillée d'un mode de réalisation donné à titre d'exemple, description illustrée par le dessin joint dans lequel :
la figure 1 représente en perspective un pied conforme à l'invention ;
la figure 2 représente le pied en coupe dans un plan sagittal ;
la figure 3 représente le pied 10 en vue de dessus ;
la figure 4 représente l'articulation d'un vérin par rapport à une semelle ;
la figure 5 représente l'articulation d'orteils par rapport à la semelle ;
la figure 6 représente l'articulation des orteils par rapport au vérin.
Par souci de clarté, les mêmes éléments porteront les mêmes repères dans les différentes figures.

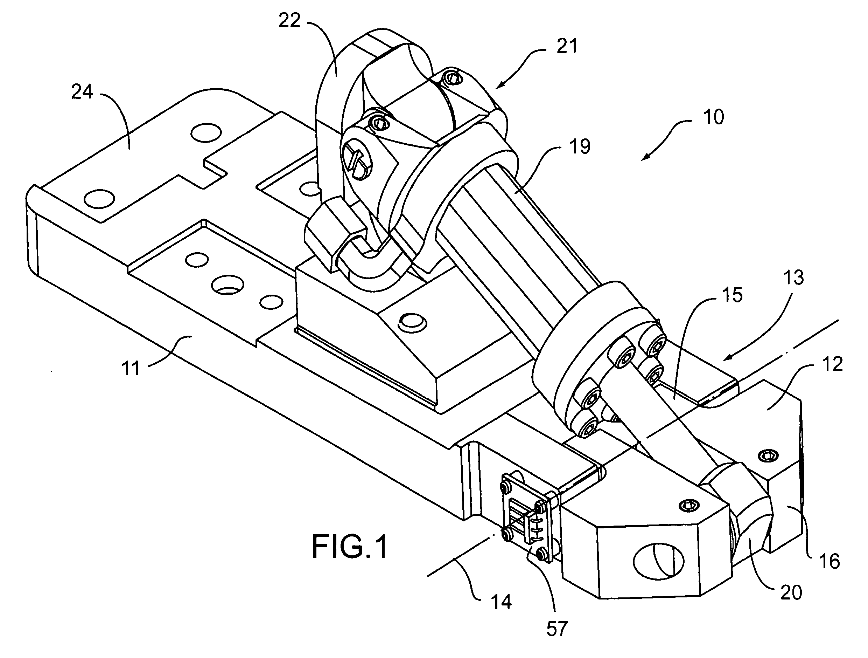

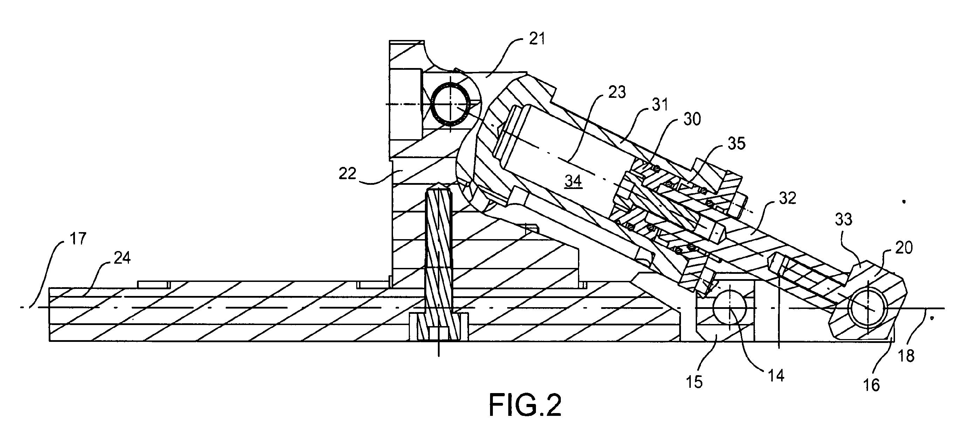

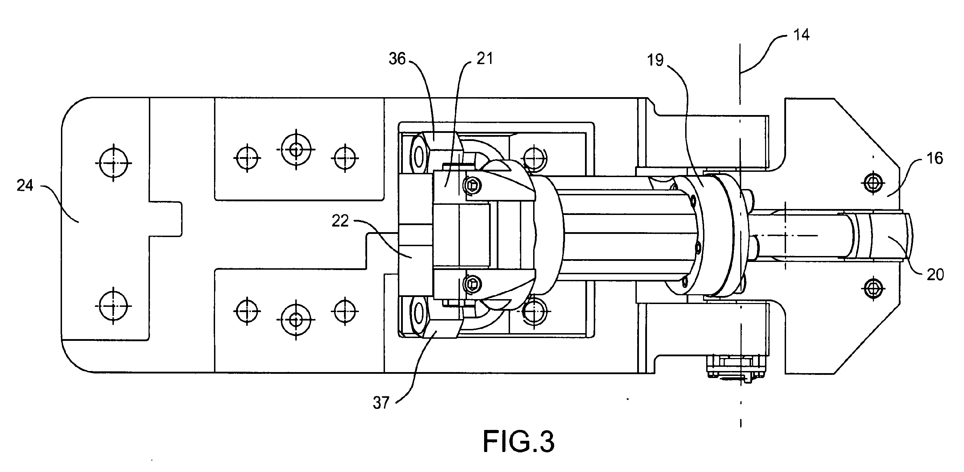

La figure 1 représente un pied 10 comprenant une semelle 11 et des orteils 12 articulés par rapport à la semelle 11 au moyen d'une liaison 13 possédant un degré de liberté en rotation dans un plan sagittal du pied 10 autour d'un axe 14. Dans l'exemple représenté, les orteils 12 sont solidaires et sont réalisés d'une pièce mécanique monobloc. Les orteils ont deux extrémités 15 et 16. L'extrémité 15 est située sur l'axe 14 et l'extrémité 16 forme la pointe du pied 10. La liaison 13 permet le déplacement des orteils avec un débattement angulaire d'environ 60° autour de l'axe 14. La figure 1 représente les orteils 12 dans une première position extrême dans leur mouvement de rotation autour de l'axe 14. Dans cette position les orteils 12 sont dans le prolongement de la semelle 11. Autrement dit, la semelle est s'étend principalement selon un plan 17 et un axe 18 passant par les deux extrémités 15 et 16 est situé dans le plan 17 de la semelle 11. La figure 2 représente le pied 10 en coupe dans un plan sagittal perpendiculaire au plan 17 et la figure 3 représente le pied 10 en vue de dessus.

Une seconde position extrême des orteils 12 est atteinte lorsque les orteils 12 sont relevés au maximum, autrement dit lorsque l'axe 18 contenant les deux extrémités 15 et 16 fait un angle de 60° avec le plan 17 de la semelle 11.

Lors de la marche d'un robot équipé de pieds 10 comprenant des orteils 12 articulés, on peut mettre en oeuvre un amortisseur comme actionneur. Un tel actionneur applique aux orteils 12 un couple qui ne dépend pas de la course angulaire des orteils 12 mais de leur vitesse angulaire. Généralement, plus la vitesse angulaire est importante, plus le couple exercé par l'amortisseur est important. L'utilisation d'un amortisseur permet de faire varier le couple appliqué à la liaison 13 en fonction de la vitesse à laquelle le robot se déplace en marchant. Lorsque le robot court, un amortisseur permet d'appliquer à la liaison un couple plus important que lorsqu'il marche. Il est bien entendu possible de compléter le couple exercé par l'amortisseur par un couple purement proportionnel à la course.

L'actionneur peut également être un moteur afin d'appliquer un couple moteur à la liaison 13. Ce couple permet de faire passer les orteils 12 de la seconde position extrême à la première position extrême. Ce couple, appliqué sur les orteils 12, améliore la propulsion du robot générée par le pied 10 et réduit d'environ 30% l'énergie nécessaire à la marche.

De façon plus générale, le pied comprend des moyens pour contrôler l'actionneur 19 de façon autonome, c'est-à-dire indépendamment de toute autre articulation du robot. Par exemple, les mouvements de la liaison 13 sont indépendants des mouvements de la cheville du robot ou de la phase de marche du robot. Les moyens pour contrôler l'actionneur 19 permettent de choisir un état parmi :
- une rigidité complète de la liaison 13,
- un couple de rappel fonction de la course angulaire de la liaison 13,
- un amortissement de la rotation de la liaison 13,
- un apport énergétique lors de la rotation de la liaison 13.

Il est possible de réaliser cette motorisation au moyen d'un moteur rotatif agissant entre la semelle 11 et les orteils 12 au niveau de la liaison 13. Ce type de moteur risquerait de sortir de l'encombrement défini par le modèle de Hanavan. Une autre alternative consiste à réaliser cette motorisation au moyen d'un vérin linéaire 19 prenant appui à une de ses extrémités 20 sur les orteils 12 au niveau de leur extrémité 16 et à une autre de ses extrémités 21 sur un montant 22 solidaire de la semelle 11. Le montant 22 s'élève perpendiculairement au plan 17 de la semelle 11.

L'appui du vérin 19 sur le montant 22 est situé au dessus d'un plan 17 dans lequel la semelle 11 s'étend principalement de façon à maintenir concourant l'axe 23 du vérin 19 et l'axe 18 reliant la liaison 13 et l'appui du vérin 19 sur les orteils 12. Autrement dit, l'extrémité 21 du vérin 19 s'accroche au montant 22 dans sa partie supérieure au dessus du plan 17 afin d'éviter que l'axe 18 ne se trouve aligné avec un axe 23 du vérin, axe joignant les extrémités 20 et 21 quelle que soit la position des orteils 12 lors de leur mouvement. Un tel alignement empêcherait l'application d'un couple sur la liaison 13. La hauteur du montant 22 doit néanmoins être limitée afin de réduire le volume du pied 10.

L'inclinaison du vérin 19 par rapport au plan de la semelle 11 permet également un débattement angulaire des orteils 12 pouvant s'étendre de part et d'autre du plan de la semelle 11. Plus précisément, le débattement angulaire permet principalement de relever les orteils 12 par rapport au plan de la semelle 11. L'inclinaison du vérin 19 permet également d'abaisser légèrement les orteils 12 au dessous du plan de la semelle 11. Même sans abaisser les orteils 12, cette inclinaison du vérin 19 permet d'augmenter le couple appliqué par le vérin 19 aux orteils 12. Ce débattement permet d'améliorer la phase propulsive de la marche du robot.

La semelle 11 s'étend depuis un talon 24 jusqu'à liaison 13 située à l'avant de la semelle 11. Le montant 22 est fixé vers l'avant de la semelle 11, libérant ainsi l'arrière de la semelle 11 permettant d'y fixer une cheville du robot, non représentée.

Le vérin 19 peut être électrique, il peut aussi être actionné par un fluide hydraulique. A cet effet, le vérin 19 comprend un piston 30 pouvant se déplacer dans un cylindre 31 suivant l'axe 23. Le piston 30 est solidaire d'une tige 32 fixée à une chape 33 formant l'extrémité 20 du vérin 19. A l'intérieur du cylindre 31, le piston 30 délimite deux chambres 34 et 35 dans lesquels le fluide hydraulique peut entrer sous pression par l'intermédiaire de raccords, respectivement 36 et 37. Une différence de pression entre les chambres 34 et 35 permet de déplacer la tige 32 de façon à mouvoir les orteils 12. Des joints assurent l'étanchéité des chambres 34 et 35. Les orteils 12 s'élèvent ou s'abaissent en fonction du signe de la différence de pression entre les chambres 34 et 35. Le fluide hydraulique alimentant les deux chambres 34 et 35 peut être fourni par une pompe embarquée à bord du robot. Lorsque le robot comprend plusieurs actionneurs, notamment pour ses deux pieds, on peut prévoir une pompe dédiée à chaque actionneur.

. Il est possible de placer un ressort dans une des chambres 34 ou 35 pour ramener les orteils 12 dans le prolongement de la semelle 11. La fonction d'amortissement peut également être réalisée en calibrant un débit de fluide passant d'une chambre à l'autre au travers de la pompe. Dans ce cas, la commande de la pompe permet d'utiliser le vérin 19 soit comme moteur soit comme amortisseur en fonction du besoin. Il sera ainsi avantageusement possible de faire varier des paramètres d'amortissement par exemple au cours de la marche du robot. Selon l'invention le même actionneur peut avoir une fonction d'amortisseur ou une fonction de moteur, ces deux fonctions pouvant se combiner.

Pour assurer une démarche anthropomorphique la poussée du vérin 19 en extension est primordiale. Il est possible de réaliser la motorisation à l'aide d'un vérin simple effet dont seule la chambre 34 est susceptible d'être alimentée en fluide sous pression. Pour assurer le rappel du vérin, on place alors un ressort dans la chambre 35 qui est maintenue à la pression atmosphérique.

Les extrémités 20 et 21 du vérin 19 sont articulées respectivement par rapport aux orteils 12 et par rapport au montant 22. Chaque articulation présente un degré de liberté en rotation autour d'axes parallèles à l'axe 14.

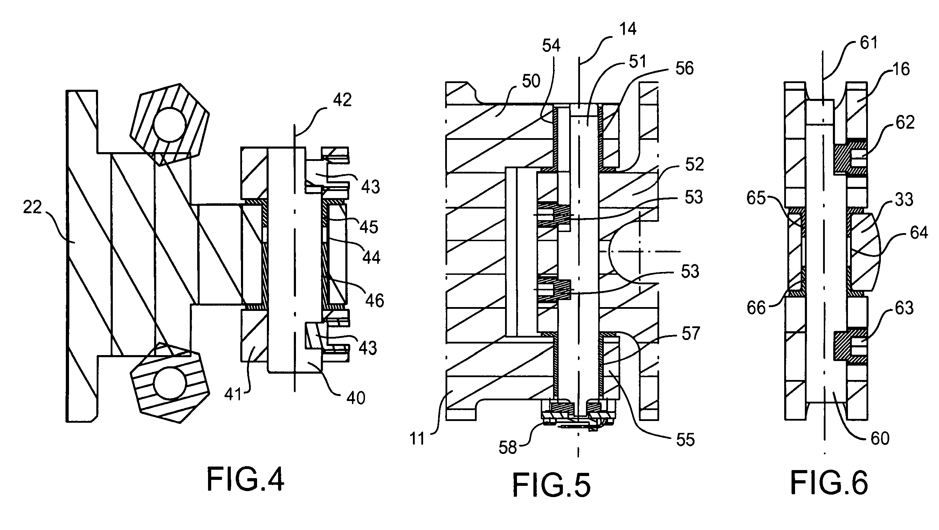

La figure 4 représente l'articulation du vérin 19 par rapport au montant 22. Cette articulation comprend un arbre 40 solidaire d'une fourche 41 du vérin 19. La fourche 41 forme l'extrémité 21 du vérin 19. L'arbre 40 s'étend suivant un axe 42 parallèle à l'axe 14. La fixation de l'arbre 40 à la fourche 41 est par exemple assurée au moyen de vis 43. L'arbre 40 peut pivoter, à l'intérieur d'un alésage 44 d'axe 42 réalisé à l'intérieur du montant 22. On peut disposer des paliers 45 et 46 entre l'alésage 44 et l'arbre 40 pour réduire les frottements lors de la rotation de l'arbre 40 dans l'alésage 44. La fourche 41 empêche toute translation du vérin 19 par rapport au montant 11 suivant l'axe 42.

La figure 5 représente l'articulation des orteils 12 par rapport à la semelle 11. Cette articulation, formant la liaison 13, peut être réalisée comme l'articulation du vérin 19 sur le montant 22. La semelle 11 comprend une fourche 50. Un arbre 51 d'axe 14 est fixé à une chape 52 appartenant aux orteils 12 au moyen de vis 53. L'arbre 51 peut coulisser dans des alésages 54 et 55 de la fourche 50. Des paliers 56 et 57 peuvent être interposés entre l'arbre 51 et les alésages, respectivement 54 et 55.

Pour connaître la position angulaire des orteils 12 autour de l'axe 14, on peut disposer au niveau du palier 57, un potentiomètre 58 délivrant une information électrique fonction de la position angulaire de l'arbre 51 solidaire des orteils 12 par rapport à la semelle 11. Cette information peut être utilisée pour asservir la commande du vérin 19.

La figure 6 représente l'articulation des orteils 12 par rapport au vérin 19. Cette articulation peut aussi être réalisée comme les deux précédentes. L'extrémité 16 des orteils 12 a la forme d'une fourche dans laquelle un arbre 60 d'axe 61 est fixé au moyen de vis 62 et 63. L'arbre 60 peut pivoter dans un alésage 64 de la chape 33. On peut disposer des paliers 65 et 66 entre l'alésage 64 et l'arbre 60 pour réduire les frottements lors de la rotation de l'arbre 60 dans l'alésage 64.

## Revendications

1. Pied pour robot humanoïde, pouvant être relié à une jambe au moyen d'une cheville comprenant :
• une semelle (11),
• des orteils (12),
• une liaison (13) motorisée, indépendante de la cheville, en rotation entre la semelle (11) et les orteils (12), les orteils (12) pouvant se déplacer selon une course angulaire autour d'un axe (14) de la liaison (13),
• un actionneur (19) permettant à la motorisation de la liaison (13), **caractérisé en ce qu'**il comprend en outre des moyens pour contrôler l'actionneur (19) de façon autonome permettant de choisir un état parmi :
• une rigidité complète de la liaison (13),
• un couple de rappel fonction de la course angulaire de la liaison (13),
• un amortissement de la rotation de la liaison (13),
• un apport énergétique lors de la rotation de la liaison (13).

2. Pied selon la revendication 1, **caractérisé en ce que** la liaison (13) permet une rotation des orteils (12) par rapport à la semelle (11) dans un plan sagittal du pied (10).

3. Pied selon l'une des revendications précédentes, **caractérisé en ce que** l'actionneur est formé d'un vérin linéaire (19) prenant appui sur un montant (22) solidaire de la semelle (11) et sur les orteils (12), **en ce que** le vérin (19) effectue un mouvement selon un axe (23) contenu dans un plan sagittal du pied.

4. Pied selon la revendication 3, **caractérisé en ce que** lorsque les orteils (12) sont alignés par rapport à la semelle (11), l'axe (23) du vérin est incliné par rapport à un plan principal de la semelle (11) de façon à permettre l'abaissement des orteils (12) au dessous du plan principal de la semelle 11.

5. Pied selon l'une quelconque des revendications 3 ou 4, **caractérisé en ce que** l'appui du vérin (19) sur le montant (22) est situé au dessus d'un plan (17) dans lequel la semelle (11) s'étend principalement de façon à maintenir concourant l'axe (23) du vérin (19) et un axe (18) reliant la liaison (13) et l'appui du vérin (19) sur les orteils (12).

6. Pied selon l'une quelconque des revendications 3 à 5, **caractérisé en ce que** le vérin (19) est électrique ou hydraulique.

7. Pied selon l'une quelconque des revendications 3 à 6, **caractérisé en ce que** le vérin (19) est un vérin double effet permettant d'abaisser ou de relever les orteils (12).

8. Pied selon l'une quelconque des revendications 3 à 6, **caractérisé en ce que** le vérin (19) est un vérin simple effet destiné à pousser sur les orteils (12) de façon à les abaisser.

9. Robot humanoïde, **caractérisé en ce qu'**il comprend au moins un pied (10) selon l'une des revendications précédents.

## Claims

1. A foot for a humanoid robot, that can be linked to a leg by means of an ankle, comprising:
- a sole (11);
- toes (12);
- a motorised link (13) that is independent of the ankle and that rotates between the sole (11) and the toes (12), the toes (12) being able to move along an angular stroke about an axis (14) of the link (13);
- an actuator (19) that allows the link (13) to be motorised, **characterised in that** it further comprises means for autonomously controlling the actuator (19) allowing selection of a state from among the following:
- a completely rigid link (13);
- a restoring torque that is a function of the angular stroke of the link (13);
- a damping of the rotation of the link (13);
- an energy contribution during the rotation of the link (13).

2. The foot according to claim 1, **characterised in that** the link (13) allows rotation of the toes (12) relative to the sole (11) in a sagittal plane of the foot (10).

3. The foot according to any one of the preceding claims, **characterised in that** the actuator is formed from a linear cylinder (19) that is supported by an upright (22) integral with the sole (11) and by the toes (12), and **in that** the cylinder (19) carries out a movement along an axis (23) that is contained in a sagittal plane of the foot.

4. The foot according to claim 3, **characterised in that** when the toes (12) are aligned relative to the sole (11), the axis (23) of the cylinder is inclined relative to a main plane of the sole (11) so as to allow the toes (12) to be lowered below the main plane of the sole (11).

5. The foot according to any one of claims 3 to 4, **characterised in that** the bearing surface of the cylinder (19) on the upright (22) is located above a plane (17) in which the sole (11) extends mainly so as to maintain the intersection of the axis (23) of the cylinder (19) and an axis (18) linking the link (13) and the bearing surface of the cylinder (19) on the toes (12).

6. The foot according to any one of claims 3 to 5, **characterised in that** the cylinder (19) is electric or hydraulic.

7. The foot according to any one of claims 3 to 6, **characterised in that** the cylinder (19) is a dual-acting cylinder that allows the toes (12) to be lowered or raised.

8. The foot according to any one of claims 3 to 6, **characterised in that** the cylinder (19) is a single-acting cylinder that is designed to push on the toes (12) so as to lower them.

9. A humanoid robot, **characterised in that** it comprises at least one foot (10) according to any one of the preceding claims.

## Patentansprüche

1. Fuß für einen humanoiden Roboter, der mittels eines Fußgelenks mit einem Bein verbunden werden kann und Folgendes umfasst:
- eine Sohle (11);
- Zehen (12);
- ein von dem Fußgelenk unabhängiges motorgetriebenes Verbindungsglied (13), das sich zwischen der Sohle (11) und den Zehen (12) dreht, wobei sich die Zehen (12) über eine Winkelstrecke um eine Achse (14) des Verbindungsgliedes (13) bewegen können;
- einen Aktuator (19), der den Motorantrieb des Verbindungsgliedes (13) ermöglicht, **dadurch gekennzeichnet, dass** er ferner Mittel zum autonomen Steuern des Aktuators (19) umfasst, so dass ein Zustand aus den Folgenden ausgewählt werden kann:
- ein völlig starres Verbindungsglied (13);
- ein Rückstellmoment, das von der Winkelstrecke des Verbindungsglieds (13) abhängig ist;
- eine Dämpfung der Rotation des Verbindungsglieds (13);
- einen Energieeintrag bei der Rotation des Verbindungsglieds (13).

2. Fuß nach Anspruch 1, **dadurch gekennzeichnet, dass** das Verbindungsglied (13) eine Rotation der Zehen (12) in Bezug auf die Sohle (11) in einer Sagittalebene des Fußes (10) zulässt.

3. Fuß nach einem der vorherigen Ansprüche, **dadurch gekennzeichnet, dass** der Aktuator von einem linearen Zylinder (19) gebildet wird, der auf einem mit der Sohle (11) einstückigen Ständer (22) und auf den Zehen (12) gelagert ist, und dadurch, dass der Zylinder (19) eine Bewegung entlang einer Achse (23) ausführt, die in einer Sagittalebene des Fußes enthalten ist.

4. Fuß nach Anspruch 3, **dadurch gekennzeichnet, dass** die Achse (23) des Zylinders, wenn die Zehen (12) in Bezug auf die Sohle (11) ausgerichtet sind, in Bezug auf die Hauptebene der Sohle (11) geneigt ist, so dass die Zehen (12) unter die Hauptebene der Sohle (11) abgesenkt werden können.

5. Fuß nach Anspruch 3 oder 4, **dadurch gekennzeichnet, dass** sich die Auflage des Zylinders (19) auf dem Ständer (22) über einer Ebene (17) befindet, in der die Sohle (11) hauptsächlich so verläuft, dass die Kreuzung zwischen der Achse (23) des Zylinders (19) und einer Achse (18) beibehalten bleibt, die das Verbindungsglied (13) und die Auflage des Zylinders (19) auf den Zehen (12) verbindet.

6. Fuß nach einem der Ansprüche 3 bis 5, **dadurch gekennzeichnet, dass** der Zylinder (19) elektrisch oder hydraulisch ist.

7. Fuß nach einem der Ansprüche 3 bis 6, **dadurch gekennzeichnet, dass** der Zylinder (19) ein doppeltwirkender Zylinder ist, der ein Absenken oder Anheben der Zehen (12) ermöglicht.

8. Fuß nach einem der Ansprüche 3 bis 6, **dadurch gekennzeichnet, dass** der Zylinder (19) ein einfachwirkender Zylinder ist, der zum Schieben gegen die Zehen (12) ausgelegt ist, um diese abzusenken.

9. Humanoider Roboter, **dadurch gekennzeichnet, dass** er wenigstens einen Fuß (10) nach einem der vorherigen Ansprüche umfasst.
